# FASCICULE DE BREVET EUROPEEN

(11) **EP 3 732 818 B1**
(45) Date de publication et mention de la délivrance du brevet: **29.09.2021**
(21) Numéro de dépôt: 18830871.2
(22) Date de dépôt: 28.12.2018
(51) Int. Cl.: H04L 9/08, H04L 29/06

(54) **PROCÉDÉ ET SYSTÈME D'ACTIVATION CRYPTOGRAPHIQUE D'UNE PLURALITÉ D'ÉQUIPEMENTS**
VERFAHREN UND SYSTEM ZUR KRYPTOGRAFISCHEN AKTIVIERUNG EINER VIELZAHL VON AUSRÜSTUNGSGEGENSTÄNDEN
METHOD AND SYSTEM FOR CRYPTOGRAPHIC ACTIVATION OF A PLURALITY OF EQUIPEMENT ITEMS

(30) Priorité: 28.12.2017 FR 1701387
(43) Date de publication de la demande: 04.11.2020
(73) Titulaire: THALES, 92400 Courbevoie (FR)
(72) Inventeur: BOULAY, Ludovic, 92622 GENNEVILLIERS CEDEX (FR); LEFRANC, David, 92622 GENNEVILLIERS CEDEX (FR)
(74) Mandataire: Lavoix
(86) Numéro de dépôt international: PCT/EP2018/097071
(87) Numéro de publication internationale: WO 2019/129842

(56) Documents cités:
- EP-A1- 2 775 656
- WO-A1-01/74005
- WO-A2-2005/088891
- US-A1- 2014 079 221

## Description

La présente invention concerne le domaine de la sécurité d'équipements, en particulier l'obtention d'une clé cryptographique utilisée pour le chiffrement ou le déchiffrement de données manipulées par un équipement.

Un équipement sécurisé doit en général effectuer deux tâches :
- le chargement des exécutables et données spécifiques de l'équipement, et son démarrage sur la base de ces éléments ;
- la récupération ou la construction d'une clé cryptographique utilisée pour chiffrer ou déchiffrer des données par un équipement.

La première tâche est résolue par des techniques non traitées dans la présente proposition de brevet. La seconde tâche suppose que la première tâche est résolue et permet ensuite de « rougir » (i.e. déchiffrer, ou encore obtenir « en clair ») les données « noires » (i.e. chiffrées) stockées ou récupérées par l'équipement (ou inversement de « noircir » (i.e. chiffrer) les données « rouges » (i.e. déchiffrées) stockées ou récupérées par l'équipement). Pour procéder à ce « rougissement », l'équipement a plusieurs possibilités :
récupérer une clé cryptographique stockée dans l'équipement ; la clé peut être stockée sur une mémoire dédiée et, idéalement, être protégée par des moyens physiques particuliers (du niveau de ce que peut proposer un TPM - en anglais « Trusted Platform Module »- par exemple) ;
proposer la saisie d'une clé cryptographique par un opérateur ;
permettre l'injection d'une clé cryptographique depuis un périphérique connecté à l'équipement (par exemple une carte à puce) ou depuis une interface réseau ;
procéder à la construction d'une clé cryptographique sur la base de deux demi-clés non sensibles (la connaissance d'une demi-clé ne suffisant pas à déchiffrer / attaquer les données chiffrées à récupérer) : la première demi-clé est stockée sur l'équipement, la seconde est stockée en général sur un périphérique amovible.

Chacune de ces solutions a des avantages (en général : la simplicité de la procédure) et des inconvénients (bien souvent : des compromis de sécurité, voire des difficultés de passage à l'échelle lorsqu'il s'agit de démarrer un grand nombre d'équipements en temps contraint).

La quatrième solution fait partie des solutions dites d'activation cryptographique. Elle fait appel en général à un « bouchon CIK » (voir https://en.wikipedia.org/wiki/KSD-64). La mise en œuvre de ce type de solution nécessite d'avoir un accès physique à l'équipement activé. Or certains cas d'emploi sont incompatibles de ce type d'exigence. C'est le cas par exemple :
des équipements communicants disséminés sur un théâtre d'opération ou un réseau de communication ;
des équipements (physiques ou virtualisés) déployés dans un cloud.

Le but de l'invention est de proposer une solution d'obtention d'une clé cryptographique utilisée pour chiffrer ou déchiffrer des données chiffrées utilisées par l'équipement qui permette de démarrer un grand nombre d'équipements (ou plus généralement d'environnements d'exécution, en particulier des environnements virtualisés) en temps contraint et à distance.

US 2014/079221 divulgue un procédé de gestion de données cryptées stockées dans un centre de données.

A cet effet, suivant un premier aspect, l'invention propose un système d'activation cryptographique comprenant un centre d'activation et un ensemble de premiers équipement(s), lesdits centre d'activation et équipements étant connectés par un réseau de télécommunications, dans lequel chaque premier équipement est adapté pour chiffrer, respectivement déchiffrer, des données en fonction de ladite clé principale de chiffrement, lorsque ledit équipement dispose de ladite clé principale de chiffrement déchiffrée, ledit système d'activation étant caractérisé en ce que :
chaque premier équipement comprend une mémoire non volatile stockant une clé principale de chiffrement chiffrée par une première clé secondaire de chiffrement et est adapté pour, à un redémarrage de l'équipement, générer une requête d'activation cryptographique indiquant un identifiant dudit premier équipement et pour transmettre ladite requête d'activation cryptographique au centre d'activation via le réseau de télécommunications ;
le centre d'activation est adapté pour recevoir ladite requête d'activation, pour valider la requête d'activation en fonction d'au moins l'identifiant d'équipement indiqué dans la requête, et pour, seulement s'il a validé la requête d'activation, générer un message de réponse d'activation comprenant ladite première clé secondaire de données du premier équipement et pour transmettre ladite réponse d'activation au premier équipement via le réseau de télécommunications ;
ledit premier équipement étant adapté pour recevoir la réponse d'activation cryptographique, pour finaliser son activation cryptographique en extrayant la première clé secondaire de données du premier équipement de ladite réponse, en déchiffrant ladite clé principale de chiffrement stockée dans la mémoire avec la première clé de chiffrement secondaire extraite et en obtenant ainsi ladite clé principale de chiffrement en clair en vue du chiffrement de données par ledit premier équipement avec ladite clé principale ; ledit premier équipement est en outre adapté pour obtenir une deuxième clé de chiffrement
secondaire, pour chiffrer la clé principale de chiffrement avec ladite deuxième clé de chiffrement secondaire obtenue, pour stocker ladite clé principale de chiffrement chiffrée dans la mémoire non volatile ; et
ledit premier équipement étant en outre adapté pour, préalablement à une mise hors service postérieure audit redémarrage, supprimer de sa mémoire non volatile la clé principale de chiffrement en clair et la deuxième clé de chiffrement secondaire en clair.

L'invention permet ainsi de disposer d'une solution permettant de procéder à une opération d'activation à distance depuis un poste d'activation centralisé, en propageant les données d'activation vers les équipements à activer par-dessus des réseaux éventuellement non maîtrisés,

Elle autorise en outre la mise en œuvre d'une propagation d'une activation le long d'une chaîne d'activation pour améliorer les performances d'une opération d'activation massive (i.e. sur un très grand nombre d'équipements ou d'environnements d'exécution à activer en un minimum de temps).

Dans des modes de réalisation, le système d'activation cryptographique suivant l'invention comporte en outre une ou plusieurs des caractéristiques suivantes :
- chaque premier équipement est adapté pour, à chaque redémarrage du premier équipement, générer une requête d'activation cryptographique destinée au centre d'activation pour la transmission par ce dernier de la clé de chiffrement secondaire ayant été utilisée par le premier équipement pour obtenir la clé principale chiffrée stockée sur la mémoire non volatile ;
- chaque premier équipement est en outre adapté pour, avant ledit redémarrage, stocker dans la mémoire non volatile, sa première clé secondaire de données chiffrée par une clé publique de chiffrement asymétrique en correspondance avec sa clé principale de chiffrement chiffrée par ladite première clé secondaire de chiffrement ;
- chaque premier équipement étant en outre adapté pour, lors de la génération de la requête d'activation, extraire de sa mémoire non volatile ladite première clé secondaire de données chiffrée par la clé publique de chiffrement asymétrique préalablement stockée et pour l'insérer dans la requête d'activation ;
   le centre d'activation étant adapté pour extraire de la requête d'activation reçue ladite première clé secondaire de données chiffrée par la clé publique de chiffrement asymétrique, pour la déchiffrer à l'aide d'une clé privée de chiffrement asymétrique associée à ladite clé publique de chiffrement
   asymétrique, la première clé secondaire de données du premier équipement comprise dans le message de réponse d'activation généré par ledit centre étant ladite première clé secondaire de données ainsi déchiffrée par la clé privée ;
   chaque premier équipement étant en outre adapté pour, avant ledit redémarrage, stocker dans la mémoire non volatile, la deuxième clé secondaire de chiffrement chiffrée par la clé publique de chiffrement asymétrique en correspondance avec la clé principale de chiffrement chiffrée par ladite clé secondaire de chiffrement ;
- chaque premier équipement est en outre adapté pour chiffrer tout ou partie de la requête d'activation et déchiffrer tout ou partie de la réponse d'activation à l'aide d'une clé symétrique de chiffrement des communications ; et parallèlement le centre d'activation est en outre adapté pour chiffrer tout ou partie de la réponse d'activation et déchiffrer tout ou partie de la requête d'activation à l'aide de ladite clé symétrique de chiffrement des communications ;
- le système d'activation cryptographique comprend en outre des deuxièmes équipements, et les premiers équipements, les deuxièmes équipements et le centre d'activation sont organisés sous forme arborescente ayant pour racine ledit centre d'activation, les premiers équipements étant les pères des deuxièmes équipements, dans lequel chaque deuxième équipement est adapté pour effectuer vis-à-vis de son premier équipement père les opérations décrites dans les revendications précédentes comme réalisées par le premier équipement vis-à-vis du centre d'activation ; et une fois son activation cryptographique effectuée, chaque premier équipement est alors adapté pour effectuer vis-à-vis de chacun de ses deuxièmes équipements fils, les opérations décrites dans les revendications précédentes comme réalisées par le centre d'activation vis-à-vis des premiers équipements.

Suivant un deuxième aspect, la présente invention propose un équipement adapté pour être connecté par un réseau de télécommunication à un système d'activation cryptographique comprenant un centre d'activation, ledit équipement étant adapté pour chiffrer, respectivement déchiffrer, des données en fonction d'une clé principale de chiffrement, lorsque ledit équipement dispose de ladite clé principale de chiffrement déchiffrée, caractérisé en ce qu'il comprend une mémoire non volatile stockant une clé principale de chiffrement chiffrée par une première clé secondaire de chiffrement et est adapté pour, à un redémarrage de l'équipement, générer une requête d'activation cryptographique indiquant un identifiant dudit équipement et pour transmettre ladite requête d'activation cryptographique au centre d'activation via le réseau de télécommunications ;
ledit équipement étant adapté pour recevoir une réponse d'activation cryptographique comprenant ladite première clé secondaire de données de l'équipement en provenance du centre d'activation, pour finaliser son activation cryptographique en extrayant de ladite réponse la première clé secondaire de données de l'équipement, en déchiffrant ladite clé principale de chiffrement stockée dans la mémoire avec la première clé de chiffrement secondaire extraite et en obtenant ainsi ladite clé principale de chiffrement en clair en vue du chiffrement de données par ledit équipement avec ladite clé principale ; ledit équipement est en outre adapté pour obtenir une deuxième clé de chiffrement secondaire, pour chiffrer la clé principale de chiffrement avec ladite deuxième clé de chiffrement secondaire obtenue, pour stocker ladite clé principale de chiffrement chiffrée dans la mémoire non volatile ; et
ledit équipement étant en outre adapté pour, préalablement à une mise hors service postérieure audit redémarrage, supprimer de sa mémoire non volatile la clé principale de chiffrement en clair et la deuxième clé de chiffrement secondaire en clair.

Suivant un troisième aspect, la présente invention propose un procédé d'activation cryptographique dans un système d'activation cryptographique comprenant un centre d'activation et un ensemble de premiers équipement(s) connectés par un réseau de télécommunications, ledit procédé étant caractérisé en ce qu'il comprend les étapes suivantes :
- stockage par chaque premier équipement d'une une clé principale de chiffrement chiffrée par une première clé secondaire de chiffrement dans une mémoire non volatile du premier équipement ;
- à un redémarrage du premier équipement, génération par le premier équipement d'une requête d'activation cryptographique indiquant un identifiant dudit premier équipement et transmission par le premier équipement de ladite requête d'activation cryptographique au centre d'activation via le réseau de télécommunications ;
- réception par le centre d'activation de ladite requête d'activation, validation de la requête d'activation par le centre d'activation en fonction d'au moins l'identifiant du premier équipement indiqué dans la requête, et seulement s'il a validé la requête d'activation, génération par le centre d'activation d'un message de réponse d'activation comprenant ladite première clé secondaire de données du premier équipement et transmission par le centre d'activation de ladite réponse d'activation au premier équipement via le réseau de télécommunications ;
- réception par ledit premier équipement de la réponse d'activation cryptographique, finalisation de son activation cryptographique en extrayant la première clé secondaire de données du premier équipement de ladite réponse, en déchiffrant ladite clé principale de chiffrement stockée dans la mémoire avec la première clé de chiffrement secondaire extraite et en obtenant ainsi ladite clé principale de chiffrement en clair ;
- chiffrement, respectivement déchiffrement par chaque premier équipement de données en fonction de la clé principale de chiffrement en clair obtenue ;
- obtention par ledit premier équipement d'une deuxième clé de chiffrement secondaire, chiffrement par ledit premier équipement de la clé principale de chiffrement avec ladite deuxième clé de chiffrement secondaire obtenue, puis stockage de ladite clé principale de chiffrement chiffrée par ledit premier équipement dans sa mémoire non volatile ; et
- préalablement à une mise hors service du premier équipement postérieure audit redémarrage, suppression de sa mémoire non volatile de la clé principale de chiffrement en clair et de la deuxième clé de chiffrement secondaire en clair.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue d'un système d'activation cryptographique dans un mode de réalisation de l'invention ;
- la figure 2 est un organigramme d'étapes mises en œuvre d'un procédé d'activation cryptographique dans un mode de réalisation de l'invention ;
- la figure 3 est une vue des équipements et du centre d'activation dans un mode de réalisation de l'invention.

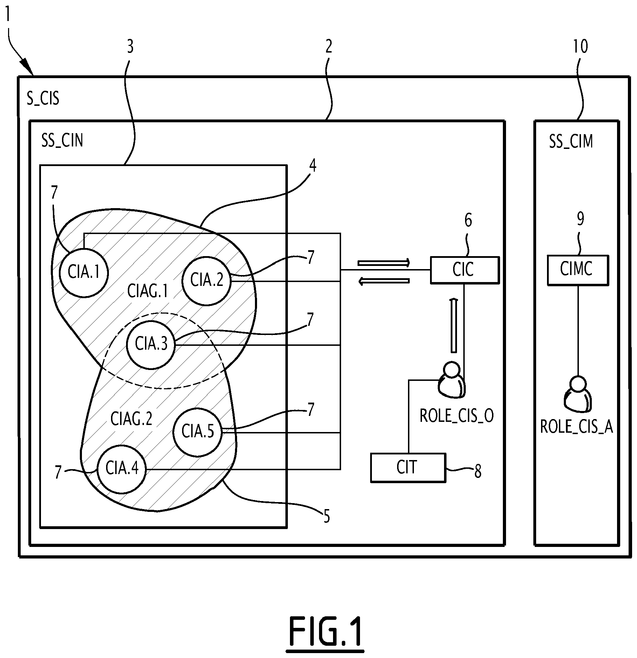

La figure 1 représente un système d'activation cryptographique S_CIS (en anglais « Cryptographic Ignition System ») 1, dans un mode de réalisation de l'invention.

Le S_CIS 1 comprend deux sous-systèmes : un sous-système de supervision d'activation cryptographique SS_CIM (en anglais « Cryptographic Ignition Management Sub-System ») 10 et un sous-système de réseau d'activation cryptographique SS_CIN 2 (en anglais « Cryptographic Ignition Network Sub-System »).

Dans le mode de réalisation considéré, le SS_CIM 10 est physiquement isolé du SS_CIN 2 pour éviter toute fuite vers le réseau de données sensibles stockées dans le SS_CIM 10

Le SS_CIM 10 comporte un centre de gestion d'activation cryptographique CIMC (en anglais « Cryptographic Ignition Management Center ») 9. Le CIMC 9 correspond au centre de gestion du système 1 et comprend par exemple une unité centrale, une mémoire et une interface homme-machine permettant les échanges avec un individu ayant le rôle d'administrateur du système, ROLE_CIS_A.

Le SS_CIN 2 comprend un centre de réseau d'activation cryptographique CIC 6 (en anglais « Cryptographic Ignition Center »). Le CIC 6 comprend par exemple une unité centrale, une mémoire et une interface homme-machine permettant les échanges avec un individu ayant le rôle d'opérateur du système, ROLE_CIS_O. Cet opérateur ROLE_CIS_O détient, dans le mode de réalisation considéré, un support de sécurité CIT 8, de type carte à puce par exemple, permettant de réaliser des opérations de sécurité nécessaires à l'activation d'un équipement dans le cas particulier décrit ici lorsque le CIT 8 est interfacé au CIC 6 (par exemple lorsque la carte à puce 8 est insérée dans un réceptacle complémentaire dans le CIC 6, pour authentifier le porteur ROLE_CIS_O). Des éléments cryptographiques nécessaires à l'authentification de l'opérateur et optionnellement à l'activation d'un équipement sont également stockés sur ce support CIT 8, notamment le CIT 8 dispose a minima d'une clé privée de chiffrement asymétrique notée AK_chiff.pr et associée à la clé publique notée AK_chiff.pub (pour rappel, une telle clé publique permet de chiffrer un message quelconque, mais seul le possesseur de la clé privée peut déchiffrer le message ainsi chiffré).

La machine CIC 6 dispose d'une mémoire non nécessairement de confiance et est adaptée pour communiquer avec le CIT 8.

Le SS_CIN 2 comprend un ensemble 3 d'équipements 7. Chaque équipement 7 comprend un dispositif d'activation CIA (en anglais « Cryptographic Ignition Agent »), qui dans l'équipement, est adapté pour communiquer avec le CIC 6 et pour réaliser les opérations nécessaires à l'activation cryptographique de l'équipement. Sur la figure 1 sont ainsi représentés les équipements 7 distincts comportant chacun un dispositif d'activation respectivement CIA.1, CIA.2, CIA.3, CIA.4, CIA.5.

Des équipements 7 peuvent être définis dans le CIMC 9 comme formant un groupe, CIAG (en anglais « Cryptographie Ignition Agent Group »). Les opérateurs ROLE_CIS_0 sont autorisés à gérer l'activation d'un groupe d'équipements. Un équipement peut appartenir à plusieurs groupes. Par exemple, dans le cas représenté, les dispositifs d'activation CIA.1, CIA.2, CIA.3 forment le groupe CIAG.1. Et les dispositifs d'activation CIA.3, CIA.4, CIA.5 forment le groupe CIAG.2. Chaque groupe correspond à une paire de clé AK_chiff.pr/AK_chiff.pub, qui lui est propre et qui est différente de celle correspondant à un groupe différent.

Chacun des équipements/dispositifs d'activation CIA.1, CIA.2, CIA.3, CIA.4, CIA.5 est relié par une liaison bi-directionnelle (qui peut être banalisée, donc pas forcément de confiance) de télécommunication avec le CIC 6, par exemple via le réseau Internet ou un réseau de radiocommunication mobile 3G ou 4G. Les équipements 7 et le CIC 6 comprennent donc les interfaces (par exemple modem ou antenne radiofréquence et émetteur-récepteur radiofréquence ...) adaptées pour mettre en œuvre cette liaison.

Dans le cas considérés, les équipements 7 sont les équipements d'un centre de données (en anglais « data center »), notamment ordinateurs centraux, serveurs, baies de stockage, équipements réseaux et de télécommunications, constituant le système d'information d'une entreprise (dans un autre mode de réalisation, l'ensemble 3 d'équipements est un parc d'équipements stockant des données d'une entreprise quelconque).

De nos jours, les centres de données ont d'importants besoins en matière de stockage leur permettant tout aussi bien de stocker des informations appartenant à des clients, mais aussi leurs propres données. Ce volume engendre un important flux entrant et sortant de matériels, et une problématique de sécurité pour un centre de données est de garantir qu'un disque de stockage de données sortant n'implique pas une fuite des données qu'il contient (par exemple un « attaquant » récupérant les disques durs dans une décharge pour y analyser les données qu'ils contiennent).

Une solution à cette problématique de sécurité est de chiffrer l'ensemble des disques entrant et ainsi, lors de leurs sorties : les disques ne sont alors plus exploitables par un « attaquant » sans la clé de chiffrement détenue au sein du centre de données.

La présente invention propose aux administrateurs du centre de données considéré ici de résoudre en outre :
- une problématique de sécurité : pour chaque équipement 7 au sein du centre de données, comment lui mettre à disposition à chaque démarrage, de manière sécurisé, la clé de chiffrement de son disque dur (la clé ne pouvant être stockée en clair avec l'équipement) ;
- une problématique de disponibilité/performance : comment mettre rapidement à disposition les clés de chiffrement pour que tous les équipements 7 puissent démarrer en un temps en accord avec la politique de disponibilité du centre de données (l'injection de clé par un opérateur sur tous ces équipements n'est pas envisageable).

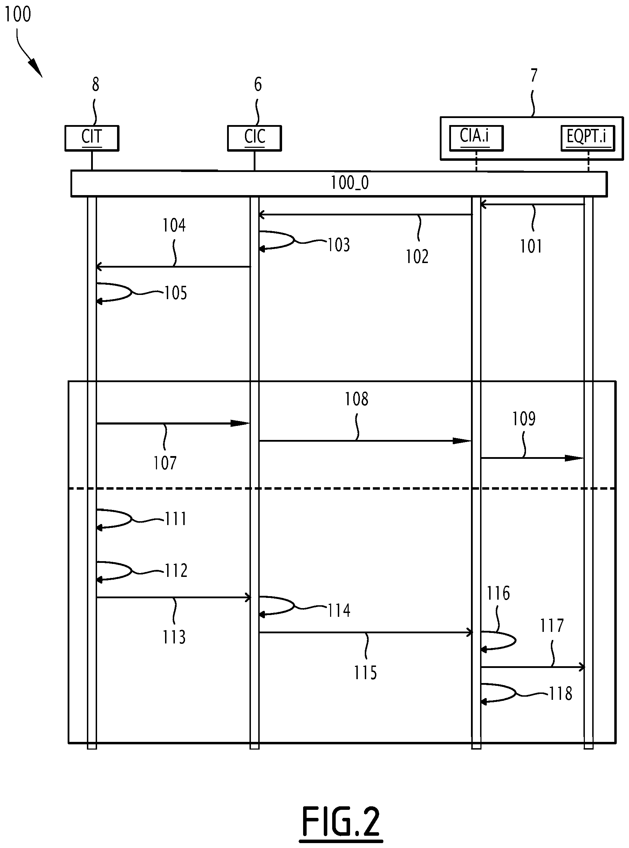

A cette fin, les différents éléments du système 1 tels que mentionnés ci-dessus sont adaptés pour mettre en œuvre les étapes décrites ci-dessous en référence à la figure 2.

Dans une étape d'initialisation 100_0, lorsqu'un nouvel équipement EQPT.i arrive au sein du centre de données et donc au sein du système 1, un opérateur installe et configure ce nouvel équipement EQPT.i. L'équipement EQPT.i est notamment enregistré sur le CIMC 9 par l'administrateur ROLE_CIS_A comme élément du système 1 et dans les groupes d'activation auxquels il appartient. Cette étape d'initialisation permet de récupérer des informations de première initialisation de l'équipement EQPT.i sur le système 1 : notamment le CIMC 9 prépare une clé symétrique de chiffrement des télécommunications K_COM_i_0 et des données d'authentification de l'équipement EQPT.i dont a minima une quantité à usage unique noté RAND_i_0 (cette quantité, et ses actualisations, servent à éviter un rejeu) et un identifiant « i » de l'équipement EQPT.i . Le CIMC 9 fournit, à l'aide d'un support physique, ces éléments au CIC 6 qui stocke dans sa mémoire non volatile un haché du RAND_i_0 (i.e. le résultat d'une fonction de hachage sur RAND_i_0 fournissant une empreinte de sa valeur).

Un dispositif CIA, nommé CIA.i est installé sur ce nouvel équipement EQPT.i et initialisé avec les données récupérées précédemment (identifiant « i », RAND_i_0 et K_COM_i_0).

Lors de l'installation et du premier démarrage de l'EQPT.i dans le système 1 par un opérateur, l'équipement EQPT.i (ou le CIA.i, ou distribution des traitements entre EQPT.i et CIA.i) :
- génère une clé de chiffrement DCK (en anglais « Data Ciphering Key ») aléatoirement (qui sera ensuite utilisée au cours des périodes d'utilisation opérationnelle de l'équipement EQPT.i) ;
- génère une clé symétrique temporaire de chiffrement SK_TEMP_0 aléatoirement ;
- chiffre, avec protection en intégrité par exemple, la DCK avec la clé SK_TEMP_0 : soit DCK_chiff la clé chiffrée obtenue ;
- obtient la clé publique de chiffrement, AK chiff.pub du centre d'activation CIC 6/CIT 8 et chiffre alors la clé temporaire SK_TEMP_0 avec la clé publique : soit SK_TEMP_0_chiff la clé chiffrée obtenue ;
- efface de sa mémoire non volatile :
   la DCK en clair ;
   la SK_TEMP_0 en clair ;
- stocke dans sa mémoire non volatile :
   a/ la DCK_chiff ;
   b/ la clé temporaire SK_TEMP_0_chiff ;
   c/ la clé de chiffrement des télécommunications K_COM_i_0 (si possible dans une zone mémoire protégée en confidentialité et intégrité ; il y a une clé K_COM_I_0 différente pour chaque CIA.i) ;
   d/ la quantité à usage unique RAND_i_0 (si possible dans une zone mémoire protégée en confidentialité et intégrité).

Ultérieurement, après le premier redémarrage suivant la première mise hors service de l'équipement EQPT.i (puis après chaque redémarrage suivant une mise hors service sachant que la mise hors service efface les données stockées en mémoire volatile), durant sa phase d'utilisation, l'équipement 7, comprenant l'équipement EQPT.i et le CIA.i installé sur cet équipement, ne dispose plus de sa DCK en clair et ne peut donc plus utiliser les données utiles stockées chiffrées dans sa mémoire, ni chiffrer de nouvelles données utiles à stocker. Il dispose des éléments listés précédemment stockées dans sa mémoire non volatile.

Les étapes suivantes d'activation cryptographique sont mises en œuvre pour que l'équipement EQPT_i puisse ré-obtenir sa clé de chiffrement cryptographique DCK en clair.

Dans une étape 101, l'équipement EQPT.i procède à une requête d'obtention de sa clé de chiffrement DCK en clair auprès de son dispositif CIA.i

Dans une étape 102, suite à la réception de cette requête d'obtention de clé DCK, le CIA.i génère une requête d'activation cryptographique, chiffrée en tout ou partie avec K_COM_i_0 et comprenant :
l'identifiant « i » de l'équipement EQPT.i ;
une demande de redémarrage ;
RAND_i_0;
SK_TEMP_0_chiff.

Le CIA.i transmet cette requête d'activation cryptographique au CIC 6, sur la liaison les reliant.

Dans une étape 103, à l'aide de l'identifiant « i » fourni, le CIC 6 retrouve dans sa mémoire non volatile (suivant les modes de réalisation) le haché du RAND_i_0 associé.

Si l'étape 103 retourne un résultat, dans une étape 104, le CIC 6 fournit au CIT 8 la requête reçue du CIA.i 7 et le haché du RAND_I_0 précédemment retrouvé.

Dans une étape 105, le CIT 8 réalise les vérifications suivantes :
- il reconstruit la clé K_COM_i_0 correspondant au CIA.i par des moyens cryptographiques à l'aide des éléments à sa disposition (par exemple, il reconstruit cette clé par une méthode de dérivation de clé cryptographique à partir d'une clé maitresse stockée sur le CIT ; dans un autre mode de réalisation, la clé K_COM_i_0 pourrait être stockée en mémoire non volatile sur le CIC 6) ;
- il effectue les calculs cryptographiques sur les éléments de la requête impliquant la K_COM_I_0 pour valider si les données chiffrées par cette clé sont intègres, puis si nécessaire pour effectuer le déchiffrement des données chiffrées à l'aide de cette clé ;
- il vérifie la validité de RAND_i_0 reçu en la comparant avec la quantité précédemment stockée dans le CIC 6 telle que définie par le haché du RAND_i_0.
Si l'une de ces vérifications n'est pas correcte, dans une étape 107, le CIT 8 répond au CIC 6 que l'activation a été refusée et ainsi, dans une étape 108, le CIC 6 répond au CIA.i qu'il n'autorise pas l'activation cryptographique. Ce refus est ensuite relayé, dans une étape 109, par un message de refus depuis le CIA.i à l'EQPT.i. L'équipement ne reçoit pas les éléments nécessaires à son activation et il est alors pour lui impossible de démarrer (i.e. il ne peut pas déchiffrer son disque dur sans la clé).

En outre, un opérateur alors présent sur le centre d'activation CIC 6/CIT 8 peut optionnellement contrôler la demande d'activation de l'équipement 7 et l'autoriser ou la refuser. Dans le cas d'un refus de l'opérateur, les étapes 108, 109 telles qu'indiquées ci-dessus sont mises en œuvre.

Si les vérifications à l'étape 105 sont correctes et en l'absence de refus de l'opérateur, le CIT 8, dans une étape 111, déchiffre la quantité SK_TEMP_0_Chiff pour permettre l'activation à l'aide de sa clé privé AK_chiff.pr.

Ainsi, dans une étape 112, le CIT 8 génère :
- une nouvelle quantité à usage unique d'authentification RAND_i_1 à utiliser pour la prochaine requête d'activation de l'équipement 7 ;
- une nouvelle clé de chiffrement de télécommunications K_COM_i_1 à utiliser pour la prochaine requête d'activation de l'équipement 7.

Puis le CIT 8 chiffre par K_COM_i_0 :
- la quantité SK_TEMP_0 ;
- la nouvelle quantité à usage unique d'authentification RAND_i_1 ;
- la nouvelle clé de chiffrement de télécommunications K_COM_i_1.

Le CIT 8 dans une étape 113 envoie, au CIC 6, les éléments suivants :
- les éléments chiffrés par K_COM_I_0 à l'étape 112;
- le haché du RAND_I_1;

Dans une étape 114, à la réception de ces éléments, le CIC 6 met à jour le haché du RAND_I_1 dans sa mémoire non volatile.

De plus, le CIC 6 envoie ensuite au CIA.i les éléments chiffrés par K_COM_i_0 dans un message de réponse d'activation cryptographique, dans une étape 115.

Dans une étape 116, le CIA.i déchiffre avec K_COM_i_0 le message de réponse reçu.

Puis il utilise la SK_TEMP_0 reçue pour déchiffrer DCK_chiff.

Le CIA.i fournit alors dans une étape 117 la clé DCK en clair à l'EQPT.i qui l'utilise alors pour chiffrer ou déchiffrer des données utiles. L'activation cryptographique requise est alors effectuée.

Dans une étape 118, le CIA.i :
- génère aléatoirement, une nouvelle clé temporaire SK_TEMP_1, puis chiffre, le cas échéant avec protection en intégrité, la DCK avec la clé symétrique SK_TEMP_1 : soit DCK_chiff la clé chiffrée ainsi obtenue (on notera que cette génération et ce chiffrement pourraient dans un autre mode de réalisation être réalisés par le centre d'activation CIC6/CIT 8, puis transmis à l'équipement 7) ;
- chiffre la SK_TEMP_1 avec la clé publique AK_chiff.pub ; soit SK_TEMP_1_chiff la clé chiffrée obtenue ;
- efface de sa mémoire non volatile :
   la DCK en clair ;
   la SK_TEMP_1 en clair ;
- stocke dans sa mémoire non volatile (à la place des éléments a, b, c, d stockés précédemment dans la mémoire non volatile) :
   a/ DCK chiff ;
   b/ SK_TEMP_1_chiff ;
   c/ K_COM_i_1 (si possible dans une zone protégée en confidentialité et intégrité) ;
   d/ RAND_i_1 (si possible dans une zone protégée en confidentialité et intégrité).

A la prochaine mise hors tension, suivie d'un redémarrage, les étapes d'activation cryptologique décrites ci-dessus à partir de l'étape 101 seront ainsi remises en œuvre en considérant les derniers éléments a, b, c, d indiqués ci-dessus à la place des éléments a, b, c, d précédemment stockées dans les mémoires.

Ainsi, une fois l'équipement sorti du centre de données, il est alors impossible pour un attaquant de récupérer des informations sur un équipement car les données sont chiffrées et la reconstruction de la clé de chiffrement n'est pas possible sans les données cryptographiques stockée sur le CIT (ou CIC suivant les modes de réalisation).

L'ensemble des requêtes d'activation sont reçues sur le centre d'activation CIC6/CIT 8 et un dimensionnement adéquat du système 1 permet l'activation de l'ensemble des équipements 7 du système 1 en un temps en accord avec la politique d'indisponibilité du centre de données.

Dans un mode de réalisation, une activation hiérarchique est mise en œuvre permettant une activation plus rapide d'un parc d'équipements (ou d'environnements d'exécution) organisés en arbre par propagation de l'activation le long de l'arbre.

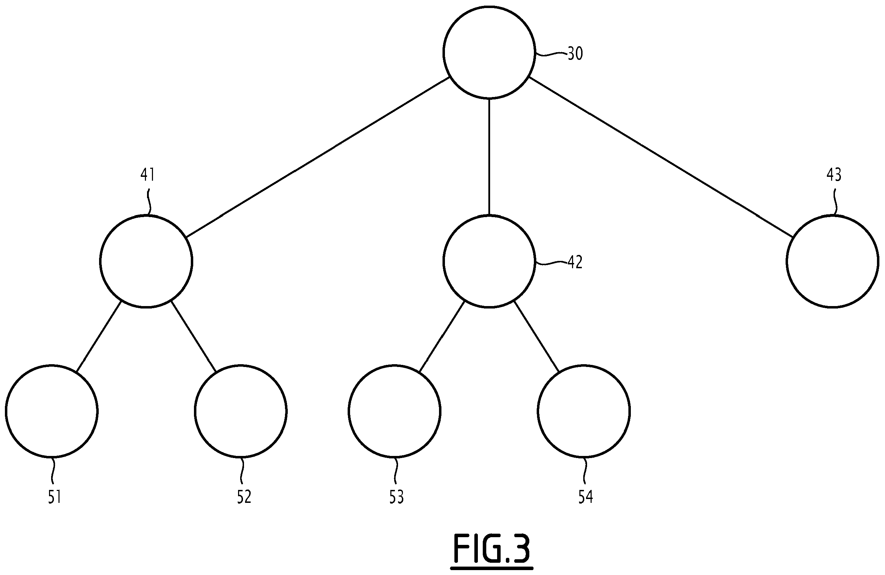

En référence à la figure 3, le nœud 30 est la racine de l'arbre et correspond au centre d'activation (CIC 6 et CIT 8) qui réalise les fonctions lui incombant telles que décrites ci-dessus en référence aux étapes à partir de l'étape 101.

Les nœuds 41, respectivement 42 et 43 sont par exemple les équipements 7 comportant les CIA.1, respectivement CIA.2, CIA.3 du groupe CIAG.1, qui mettent en œuvre à chaque redémarrage les opérations d'activation cryptographique décrites en référence à la figure 2 et incombant à l'équipement 7, en communiquant avec le CIC 6/CIC 8.

Dans cette structure en arbre, le nœud 41 (correspondant à l'équipement 7 comportant le CIA.1) a deux équipements 7 fils correspondant aux nœuds 51 et 52. Similairement le nœud 42 (correspondant à l'équipement 7 comportant le CIA.2) a deux équipements 7 fils correspondant aux nœuds 53 et 54.

Chacun des nœuds fils est relié à son nœud père par une liaison de télécommunication bilatérale. Et l'activation cryptographique est effectuée par un équipement 7 de type nœud fils conformément aux étapes décrites à partir de l'étape 101 incombant à un équipement 7 si ce n'est que c'est son nœud père, une fois que son activation cryptographique a été effectuée avec succès, qui effectue les fonctions décrites dans ces étapes comme incombant au CIC 6/CIT 8.

A son tour, un nœud fils, une fois son activation cryptographique effectuée, pourra répondre à une requête d'activation cryptographique de ses équipements fils.

L'activation d'un parc d'équipement après un redémarrage complet du parc notamment est ainsi considérablement accélérée.

La présente invention permet ainsi :
- de réaliser l'activation cryptographique de façon sécurisée même sur un réseau non maîtrisé ;
- une gestion centralisée des activations d'un parc d'équipements (ou d'environnements d'exécution) ;
- de déléguer l'activation pour augmenter les performances d'activation d'un réseau d'équipements (ou d'environnements d'exécution) ;
- l'utilisation du principe d'activation cryptographique sur un parc d'équipements.

La solution est applicable à des équipements matériels, par exemple dans des systèmes d'information, mais aussi à des solutions virtualisées, par exemple des applications logicielles. Plus généralement, l'invention peut être mise en œuvre dans tout système impliquant un réseau d'équipements qu'il s'agit d'activer à distance et en un minimum de temps.

Parmi les cas typiques, on peut citer notamment :
l'activation des machines physiques et des machines virtuelles d'un datacenter (cloud) après une coupure et restauration d'énergie ;
l'activation de parcs de machines bureautiques de type poste fixe utilisant des disques chiffrés ;
l'activation d'un réseau d'équipements de radiotransmission privés, par exemple militaires.

Dans un mode de réalisation, chaque équipement 7 comprend un microprocesseur et une mémoire et le dispositif d'activation CIA de l'équipement 7 comprend un logiciel comprenant des instructions logicielles qui est stocké dans la mémoire de l'équipement 7 et qui, lorsqu'il est exécuté, met en œuvre les étapes incombant au CIA évoquées en référence à la figure 2. De même, dans un mode de réalisation, le CIC 6 comprend un microprocesseur et une mémoire comprenant des instructions logicielles stockées dans la mémoire du CIC 6 et qui, lorsqu'elles sont exécutées, mettent en œuvre les étapes incombant au CIC 6 évoquées en référence à la figure 2.

Dans un autre mode de réalisation, un CIA d'un équipement 7 et/ou un CIC 6 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit*).

On notera que l'utilisation d'une clé de chiffrement de télécommunication K_COM_i_0 (ou à la t^{ème} itération successive : K_COM_i_t) est optionnelle.

La répartition des tâches entre le CIT 8 et le CIC 6 telle que décrite ci-dessus est configurable et modifiable, le CIC 6 pouvant en réalité dans un mode de réalisation réaliser l'ensemble des tâches. De même, la répartition des tâches entre le CIA.i et l'EQPT.i décrite ci-dessus est configurable et modifiable.

## Revendications

1. Système d'activation cryptographique (1) comprenant un centre d'activation (6,8) et un ensemble de premiers équipement(s) (7), lesdits centre d'activation et équipements étant connectés par un réseau de télécommunications, dans lequel chaque premier équipement est adapté pour chiffrer, respectivement déchiffrer, des données en fonction d'une clé principale de chiffrement, lorsque ledit premier équipement dispose de ladite clé principale de chiffrement déchiffrée, ledit système d'activation étant **caractérisé en ce que** :
chaque premier équipement comprend une mémoire non volatile stockant une clé principale de chiffrement chiffrée par une première clé secondaire de chiffrement et est adapté pour, à un redémarrage du premier équipement, générer une requête d'activation cryptographique indiquant un identifiant dudit premier équipement et pour transmettre ladite requête d'activation cryptographique au centre d'activation via le réseau de télécommunications ;
le centre d'activation est adapté pour recevoir ladite requête d'activation, pour valider la requête d'activation en fonction d'au moins l'identifiant du premier équipement indiqué dans la requête, et pour, seulement s'il a validé la requête d'activation, générer un message de réponse d'activation comprenant ladite première clé secondaire de données du premier équipement et pour transmettre ladite réponse d'activation au premier équipement via le réseau de télécommunications ;
ledit premier équipement étant adapté pour recevoir la réponse d'activation cryptographique, pour finaliser son activation cryptographique en extrayant la première clé secondaire de données du premier équipement de ladite réponse, en déchiffrant ladite clé principale de chiffrement stockée dans la mémoire avec la première clé de chiffrement secondaire extraite et en obtenant ainsi ladite clé principale de chiffrement en clair en vue du chiffrement de données par ledit premier équipement avec ladite clé principale ; ledit premier équipement est en outre adapté pour obtenir une deuxième clé de chiffrement secondaire, pour chiffrer la clé principale de chiffrement avec ladite deuxième clé de chiffrement secondaire obtenue, pour stocker ladite clé principale de chiffrement chiffrée dans la mémoire non volatile ; et
ledit premier équipement étant en outre adapté pour, préalablement à une mise hors service postérieure audit redémarrage, supprimer de sa mémoire non volatile la clé principale de chiffrement en clair et la deuxième clé de chiffrement secondaire en clair.

2. Système d'activation cryptographique (1) selon la revendication 1, dans lequel chaque premier équipement (7) est adapté pour, à chaque redémarrage du premier équipement, générer une requête d'activation cryptographique destinée au centre d'activation (6, 8) pour la transmission par ce dernier de la clé de chiffrement secondaire ayant été utilisée par le premier équipement pour obtenir la clé principale chiffrée stockée sur la mémoire non volatile.

3. Système d'activation cryptographique (1) selon la revendication 1 ou 2, dans lequel chaque premier équipement (7) est en outre adapté pour, avant ledit redémarrage, stocker dans sa mémoire non volatile, sa première clé secondaire de données chiffrée par une clé publique de chiffrement asymétrique en correspondance avec sa clé principale de chiffrement chiffrée par ladite première clé secondaire de chiffrement ;
chaque premier équipement étant en outre adapté pour, lors de la génération de la requête d'activation, extraire de sa mémoire non volatile ladite première clé secondaire de données chiffrée par la clé publique de chiffrement asymétrique préalablement stockée et pour l'insérer dans la requête d'activation ;
le centre d'activation (6, 8) étant adapté pour extraire de la requête d'activation reçue ladite première clé secondaire de données chiffrée par la clé publique de chiffrement asymétrique, pour la déchiffrer à l'aide d'une clé privée de chiffrement asymétrique associée à ladite clé publique de chiffrement asymétrique, la première clé secondaire de données du premier équipement comprise dans le message de réponse d'activation généré par ledit centre étant ladite première clé secondaire de données ainsi déchiffrée par la clé privée ;
chaque premier équipement étant en outre adapté pour, avant ledit redémarrage, stocker dans la mémoire non volatile, la deuxième clé secondaire de chiffrement chiffrée par la clé publique de chiffrement asymétrique en correspondance avec la clé principale de chiffrement chiffrée par ladite clé secondaire de chiffrement.

4. Système d'activation cryptographique (1) selon l'une des revendications précédentes, dans lequel chaque premier équipement (7) est en outre adapté pour chiffrer tout ou partie de la requête d'activation et déchiffrer tout ou partie de la réponse d'activation à l'aide d'une clé symétrique de chiffrement des communications ; et parallèlement le centre d'activation (6, 8) est en outre adapté pour chiffrer tout ou partie de la réponse d'activation et déchiffrer tout ou partie de la requête d'activation à l'aide de ladite clé symétrique de chiffrement des communications.

5. Système d'activation cryptographique (1) selon l'une des revendications précédentes, comprenant en outre des deuxièmes équipements (51, 52), dans lequel les premiers équipements (41), les deuxièmes équipements et le centre d'activation (6,8) sont organisés sous forme arborescente ayant pour racine ledit centre d'activation, les premiers équipements (41) étant les pères des deuxièmes équipements, dans lequel chaque deuxième équipement est adapté pour effectuer vis-à-vis de son premier équipement père les opérations décrites dans les revendications précédentes comme réalisées par le premier équipement vis-à-vis du centre d'activation ; et une fois son activation cryptographique effectuée, chaque premier équipement est alors adapté pour effectuer vis-à-vis de chacun de ses deuxièmes équipements fils, les opérations décrites dans les revendications précédentes comme réalisées par le centre d'activation vis-à-vis des premiers équipements.

6. Equipement adapté pour être connecté par un réseau de télécommunication à un système d'activation cryptographique (1) comprenant un centre d'activation (6,8), ledit équipement étant adapté pour chiffrer, respectivement déchiffrer, des données en fonction d'une clé principale de chiffrement, lorsque ledit équipement dispose de ladite clé principale de chiffrement déchiffrée, **caractérisé en ce qu'**il comprend une mémoire non volatile stockant une clé principale de chiffrement chiffrée par une première clé secondaire de chiffrement et est adapté pour, à un redémarrage de l'équipement, générer une requête d'activation cryptographique indiquant un identifiant dudit équipement et pour transmettre ladite requête d'activation cryptographique au centre d'activation via le réseau de télécommunications ;
ledit équipement étant adapté pour recevoir une réponse d'activation cryptographique comprenant ladite première clé secondaire de données de l'équipement en provenance du centre d'activation, pour finaliser son activation cryptographique en extrayant de ladite réponse la première clé secondaire de données de l'équipement, en déchiffrant ladite clé principale de chiffrement stockée dans la mémoire avec la première clé de chiffrement secondaire extraite et en obtenant ainsi ladite clé principale de chiffrement en clair en vue du chiffrement de données par ledit équipement avec ladite clé principale ; ledit équipement est en outre adapté pour obtenir une deuxième clé de chiffrement secondaire, pour chiffrer la clé principale de chiffrement avec ladite deuxième clé de chiffrement secondaire obtenue, pour stocker ladite clé principale de chiffrement chiffrée dans la mémoire non volatile ; et
ledit équipement étant en outre adapté pour, préalablement à une mise hors service postérieure audit redémarrage, supprimer de sa mémoire non volatile la clé principale de chiffrement en clair et la deuxième clé de chiffrement secondaire en clair.

7. Equipement selon la revendication 6 adapté pour être le père d'au moins un autre équipement qui lui est connecté via le réseau de télécommunications dans le système d'activation cryptographique organisé sous forme arborescente, ledit équipement étant adapté pour recevoir une requête d'activation cryptographique en provenance de l'autre équipement et indiquant un identifiant de l'autre équipement, pour valider la requête d'activation de l'autre équipement en fonction d'au moins l'identifiant de l'autre équipement indiqué dans la requête, et pour, seulement si l'équipement a finalisé sa propre activation cryptographique et s'il a validé la requête d'activation, générer un message de réponse d'activation comprenant ladite première clé secondaire de données de l'autre équipement et pour transmettre ladite réponse d'activation à l'autre équipement via le réseau de télécommunications.

8. Procédé d'activation cryptographique dans un système d'activation cryptographique (1) comprenant un centre d'activation (6,8) et un ensemble de premiers équipement(s) (7) connectés par un réseau de télécommunications, ledit procédé étant **caractérisé en ce qu'**il comprend les étapes suivantes :
- stockage par chaque premier équipement d'une une clé principale de chiffrement chiffrée par une première clé secondaire de chiffrement dans une mémoire non volatile du premier équipement ;
- à un redémarrage du premier équipement, génération par le premier équipement d'une requête d'activation cryptographique indiquant un identifiant dudit premier équipement et transmission par le premier équipement de ladite requête d'activation cryptographique au centre d'activation via le réseau de télécommunications ;
- réception par le centre d'activation de ladite requête d'activation, validation de la requête d'activation par le centre d'activation en fonction d'au moins l'identifiant du premier équipement indiqué dans la requête, et seulement s'il a validé la requête d'activation, génération par le centre d'activation d'un message de réponse d'activation comprenant ladite première clé secondaire de données du premier équipement et transmission par le centre d'activation de ladite réponse d'activation au premier équipement via le réseau de télécommunications ;
- réception par ledit premier équipement de la réponse d'activation cryptographique, finalisation de son activation cryptographique en extrayant la première clé secondaire de données du premier équipement de ladite réponse, en déchiffrant ladite clé principale de chiffrement stockée dans la mémoire avec la première clé de chiffrement secondaire extraite et en obtenant ainsi ladite clé principale de chiffrement en clair ;
- chiffrement, respectivement déchiffrement par chaque premier équipement de données en fonction de la clé principale de chiffrement en clair obtenue ;
- obtention par ledit premier équipement d'une deuxième clé de chiffrement secondaire, chiffrement par ledit premier équipement de la clé principale de chiffrement avec ladite deuxième clé de chiffrement secondaire obtenue, puis stockage de ladite clé principale de chiffrement chiffrée par ledit premier équipement dans sa mémoire non volatile ; et
- préalablement à une mise hors service du premier équipement postérieure audit redémarrage, suppression de sa mémoire non volatile de la clé principale de chiffrement en clair et de la deuxième clé de chiffrement secondaire en clair.

9. Procédé d'activation cryptographique selon la revendication 8, selon lequel à chaque redémarrage du premier équipement, une requête d'activation cryptographique destinée au centre d'activation (6, 8) est générée pour la transmission par ce dernier de la clé de chiffrement secondaire ayant été utilisée par le premier équipement pour obtenir la clé principale chiffrée stockée sur la mémoire non volatile.

10. Procédé d'activation cryptographique selon la revendication 8 ou 9, selon lequel le système d'activation cryptographique (1) comprend en outre des deuxièmes équipements (51, 52), et les premiers équipements (41), les deuxièmes équipements et le centre d'activation (6,8) sont organisés sous forme arborescente ayant pour racine ledit centre d'activation, les premiers équipements (41) étant les pères des deuxièmes équipements, comprenant les étapes suivantes :
- mise en œuvre par chaque deuxième équipement, vis-à-vis de son premier équipement père, des opérations décrites dans les revendications 8 ou 9 comme réalisées par le premier équipement vis-à-vis du centre d'activation ; et
- une fois son activation cryptographique effectuée, mise en œuvre par chaque premier équipement vis-à-vis de chacun de ses deuxièmes équipements fils, des opérations décrites dans les revendications 8 ou 9 comme réalisées par le centre d'activation vis-à-vis des premiers équipements.

## Patentansprüche

1. Kryptographisches Aktivierungssystem (1), das ein Aktivierungszentrum (6, 8) und einen Satz von ersten Geräten (7) umfasst, wobei das Aktivierungszentrum und die Geräte durch ein Telekommunikationsnetzwerk verbunden sind, wobei jedes erste Gerät angepasst ist, Daten abhängig von einem Verschlüsselungshauptschlüssel zu verschlüsseln bzw. zu entschlüsseln, wenn das erste Gerät den entschlüsselten Verschlüsselungshauptschlüssel besitzt, wobei das Aktivierungssystem **dadurch gekennzeichnet ist, dass**:
jedes erste Gerät einen nichtflüchtigen Speicher umfasst, der einen Verschlüsselungshauptschlüssel speichert, der durch einen ersten sekundären Verschlüsselungsschlüssel verschlüsselt ist, und angepasst ist, bei einem Neustart des ersten Geräts eine kryptografische Aktivierungsanforderung zu erzeugen, die eine Kennung des ersten Geräts angibt, und die kryptografische Aktivierungsanforderung über das Telekommunikationsnetz an das Aktivierungszentrum zu übertragen;
das Aktivierungszentrum ausgebildet ist, die Aktivierungsanforderung zu empfangen, die Aktivierungsanforderung abhängig von mindestens der in der Anforderung angegebenen Kennung des ersten Geräts zu bestätigen und nur dann, wenn es die Aktivierungsanforderung bestätigt hat, eine Aktivierungsantwortnachricht zu erzeugen, die den ersten sekundären Datenschlüssel des ersten Geräts enthält, und die Aktivierungsantwort über das Telekommunikationsnetz an das erste Gerät zu senden;
wobei das erste Gerät angepasst ist, die kryptografische Aktivierungsantwort zu empfangen, um seine kryptografische Aktivierung abzuschließen, indem es den ersten sekundären Datenschlüssel des ersten Geräts aus der Antwort extrahiert, den im Speicher gespeicherten Verschlüsselungshauptschlüssel mit dem extrahierten ersten sekundären Verschlüsselungsschlüssel entschlüsselt und dadurch den Verschlüsselungshauptschlüssel im Klartext für die Datenverschlüsselung durch das erste Gerät mit dem Hauptschlüssel erhält; wobei das erste Gerät ferner angepasst ist, einen zweiten sekundären Verschlüsselungsschlüssel zu erhalten, um den Verschlüsselungshauptschlüssel mit dem erhaltenen zweiten sekundären Verschlüsselungsschlüssel zu verschlüsseln, um den verschlüsselten Verschlüsselungshauptschlüssel in dem nichtflüchtigen Speicher zu speichern; und
wobei das erste Gerät ferner angepasst ist, vor einem auf den Neustart folgenden Herunterfahren den Verschlüsselungshauptschlüssel im Klartext und den zweiten sekundären Verschlüsselungsschlüssel im Klartext aus seinem nichtflüchtigen Speicher zu löschen.

2. Kryptographisches Aktivierungssystem (1) nach Anspruch 1, bei dem jedes erste Gerät (7) angepasst ist, bei jedem Neustart des ersten Geräts eine kryptographische Aktivierungsanforderung an das Aktivierungszentrum (6, 8) zu erzeugen, damit letzteres den sekundären Verschlüsselungsschlüssel übermittelt, der von dem ersten Gerät verwendet wurde, um den verschlüsselten Hauptschlüssel zu erhalten, der in dem nichtflüchtigen Speicher gespeichert ist.

3. Kryptographisches Aktivierungssystem (1) nach Anspruch 1 oder 2, bei dem jedes erste Gerät (7) ferner angepasst ist, vor dem Neustart in seinem nichtflüchtigen Speicher seinen ersten sekundären Datenschlüssel, der durch einen asymmetrischen öffentlichen Verschlüsselungsschlüssel in Übereinstimmung mit seinem Verschlüsselungshauptschlüssel verschlüsselt ist, der durch den ersten sekundären Verschlüsselungsschlüssel verschlüsselt ist, zu speichern;
wobei jedes erste Gerät ferner angepasst ist, bei der Erzeugung der Aktivierungsanforderung den ersten sekundären Datenschlüssel, der durch den zuvor gespeicherten öffentlichen asymmetrischen Verschlüsselungsschlüssel verschlüsselt ist, aus seinem nichtflüchtigen Speicher zu extrahieren und ihn in die Aktivierungsanforderung einzufügen;
wobei das Aktivierungszentrum (6, 8) geeignet ist, aus der empfangenen Aktivierungsanforderung den ersten sekundären Datenschlüssel zu extrahieren, der durch den öffentlichen asymmetrischen Verschlüsselungsschlüssel verschlüsselt ist, um ihn unter Verwendung eines privaten asymmetrischen Verschlüsselungsschlüssels zu entschlüsseln, der dem öffentlichen asymmetrischen Verschlüsselungsschlüssel zugeordnet ist, wobei der erste sekundäre Datenschlüssel des ersten Geräts, der in der von dem Zentrum erzeugten Aktivierungsantwortnachricht enthalten ist, der erste sekundäre Datenschlüssel ist, der so durch den privaten Schlüssel entschlüsselt wurde;
wobei jedes erste Gerät ferner angepasst ist, vor dem Neustart den zweiten sekundären Verschlüsselungsschlüssel, der durch den öffentlichen asymmetrischen Verschlüsselungsschlüssel in Übereinstimmung mit dem Verschlüsselungshauptschlüssel verschlüsselt ist, der durch den sekundären Verschlüsselungsschlüssel verschlüsselt ist, in dem nichtflüchtigen Speicher zu speichern.

4. Kryptographisches Aktivierungssystem (1) nach einem der vorhergehenden Ansprüche, bei dem jedes erste Gerät (7) ferner angepasst ist, die gesamte Aktivierungsanforderung oder einen Teil davon zu verschlüsseln und die gesamte Aktivierungsantwort oder einen Teil davon zu entschlüsseln, wobei ein symmetrischer Kommunikationsverschlüsselungsschlüssel verwendet wird; und parallel dazu die Aktivierungszentrale (6, 8) ferner angepasst ist, die gesamte Aktivierungsantwort oder einen Teil davon zu verschlüsseln und die gesamte Aktivierungsanforderung oder einen Teil davon zu entschlüsseln, wobei der symmetrische Kommunikationsverschlüsselungsschlüssel verwendet wird.

5. Kryptographisches Aktivierungssystem (1) nach einem der vorhergehenden Ansprüche, das außerdem zweite Geräte (51, 52) umfasst, wobei die ersten Geräte (41), die zweiten Geräte und das Aktivierungszentrum (6, 8) baumförmig organisiert sind, mit dem Aktivierungszentrum als Wurzel, wobei die ersten Geräte (41) die Väter der zweiten Geräte sind, wobei jedes zweite Gerät geeignet ist, in Bezug auf sein erstes Vatergerät die in den vorhergehenden Ansprüchen beschriebenen Operationen durchzuführen, wie sie von dem ersten Gerät in Bezug auf das Aktivierungszentrum durchgeführt werden; und jedes erste Gerät dann angepasst ist, sobald seine kryptographische Aktivierung durchgeführt wurde, in Bezug auf jedes seiner zweiten Sohngeräte die in den vorhergehenden Ansprüchen beschriebenen Operationen auszuführen, wie sie von der Aktivierungszentrale in Bezug auf die ersten Geräte ausgeführt werden.

6. Gerät, das geeignet ist, über ein Telekommunikationsnetz mit einem kryptographischen Aktivierungssystem (1) verbunden zu werden, das ein Aktivierungszentrum (6, 8) umfasst, wobei das Gerät angepasst ist, Daten abhängig von einem Verschlüsselungshauptschlüssel zu verschlüsseln bzw. zu entschlüsseln, wenn das Gerät über den entschlüsselten Verschlüsselungshauptschlüssel verfügt, **dadurch gekennzeichnet, dass** es einen nichtflüchtigen Speicher umfasst, der einen Verschlüsselungshauptschlüssel speichert, der durch einen ersten sekundären Verschlüsselungsschlüssel verschlüsselt ist, und angepasst ist, bei einem Neustart des Geräts eine kryptographische Aktivierungsanforderung zu erzeugen, die eine Kennung des Gerätes angibt, und die kryptographische Aktivierungsanforderung über das Telekommunikationsnetz an das Aktivierungszentrum zu übertragen;
wobei das Gerät angepasst ist, eine kryptografische Aktivierungsantwort, die den ersten sekundären Datenschlüssel des Geräts umfasst, vom Aktivierungszentrum empfängt, um seine kryptografische Aktivierung abzuschließen, wobei es aus der Antwort den ersten sekundären Datenschlüssel des Geräts extrahiert, den im Speicher gespeicherten Verschlüsselungshauptschlüssel mit dem extrahierten ersten sekundären Verschlüsselungsschlüssel entschlüsselt und dadurch den Verschlüsselungshauptschlüssel im Klartext in Hinsicht auf die Datenverschlüsselung durch das Gerät mit dem Hauptschlüssel erhält; wobei das Gerät ferner angepasst ist, einen zweiten sekundären Verschlüsselungsschlüssel zu erhalten, um den Verschlüsselungshauptschlüssel mit dem erhaltenen zweiten sekundären Verschlüsselungsschlüssel zu verschlüsseln, um den verschlüsselten Verschlüsselungshauptschlüssel in einem nichtflüchtigen Speicher zu speichern; und
wobei das Gerät ferner angepasst ist, vor einem auf den Neustart folgenden Herunterfahren den Verschlüsselungshauptschlüssel im Klartext und den zweiten sekundären Verschlüsselungsschlüssel im Klartext aus seinem nichtflüchtigen Speicher zu löschen.

7. Gerät nach Anspruch 6, das angepasst ist, der Vater mindestens eines anderen Geräts zu sein, das mit ihm über das Telekommunikationsnetz in dem kryptographischen Aktivierungssystem verbunden ist, das in Baumform organisiert ist, wobei das Gerät angepasst ist, eine kryptographische Aktivierungsanforderung von dem anderen Gerät zu empfangen und eine Kennung des anderen Geräts anzugeben, die Aktivierungsanforderung des anderen Geräts in Abhängigkeit von mindestens der Kennung des anderen Geräts, die in der Anforderung angegeben ist, zu bestätigen und nur dann, wenn das Gerät seine eigene kryptographische Aktivierung abgeschlossen und die Aktivierungsanforderung bestätigt hat, eine Aktivierungsantwortnachricht zu erzeugen, die den ersten sekundären Datenschlüssel des anderen Geräts enthält, und die Aktivierungsantwort über das Telekommunikationsnetz an das andere Gerät zu senden.

8. Kryptographisches Aktivierungsverfahren in einem kryptographischen Aktivierungssystem (1), das ein Aktivierungszentrum (6, 8) und einen Satz erster Geräte (7) umfasst, die über ein Telekommunikationsnetz verbunden sind, wobei das Verfahren **dadurch gekennzeichnet ist, dass** es die folgenden Schritte umfasst:
- Speichern eines Verschlüsselungshauptschlüssels, der durch einen ersten sekundären Verschlüsselungsschlüssel verschlüsselt ist, durch jedes erste Gerät in einem nichtflüchtigen Speicher des ersten Geräts;
- wenn das erste Gerät neu gestartet wird, Erzeugen einer kryptografische Aktivierungsanforderung durch das erste Gerät, die eine Kennung des ersten Geräts angibt, und Übertragen der kryptografischen Aktivierungsanforderung durch erste Gerät über das Telekommunikationsnetz an die Aktivierungszentrale;
- Empfangen der Aktivierungsanforderung durch das Aktivierungszentrum, Bestätigen der Aktivierungsanforderung durch das Aktivierungszentrum auf der Basis von mindestens der in der Anforderung angegebenen Kennung des ersten Geräts und, nur wenn es die Aktivierungsanforderung bestätigt hat, Erzeugen einer Aktivierungsantwortnachricht durch das Aktivierungszentrum, die den ersten sekundären Datenschlüssel des ersten Geräts enthält, und Übertragen der Aktivierungsantwort durch das Aktivierungszentrum über das Telekommunikationsnetz an das erste Gerät;
- Empfangen der kryptografischen Aktivierungsantwort durch das erste Gerät, Abschließen seiner kryptografischen Aktivierung, wobei der erste sekundäre Datenschlüssel des ersten Geräts aus der Antwort extrahiert wird, der im Speicher gespeicherte Verschlüsselungshauptschlüssel mit dem extrahierten ersten sekundären Verschlüsselungsschlüssel entschlüsselt wird und dadurch der Verschlüsselungshauptschlüssel im Klartext erhalten wird;
- Verschlüsseln bzw. Entschlüsseln von Daten abhängig von dem erhaltenen Verschlüsselungshauptschlüssel im Klartext durch jedes erste Gerät;
- Gewinnen eines zweiten sekundären Verschlüsselungsschlüssels durch das erste Gerät, Verschlüsseln des Verschlüsselungshauptschlüssels durch das erste Gerät mit dem erhaltenen zweiten sekundären Verschlüsselungsschlüssel, dann Speichern des durch das erste Gerät verschlüsselten Verschlüsselungshauptschlüssels in seinem nichtflüchtigen Speicher; und
- vor einem Herunterfahren des ersten Geräts nach dem Neustart, Löschen des Verschlüsselungshauptschlüssels im Klartext und des sekundären Verschlüsselungsschlüssels im Klartext aus seinem nichtflüchtigen Speicher.

9. Kryptographisches Aktivierungsverfahren nach Anspruch 8, bei dem bei jedem Neustart des ersten Geräts eine kryptographische Aktivierungsanforderung an das Aktivierungszentrum (6, 8) erzeugt wird, damit letzteres den sekundären Verschlüsselungsschlüssel übermittelt, der von dem ersten Gerät verwendet wurde, um den verschlüsselten Hauptschlüssel zu erhalten, der in dem nichtflüchtigen Speicher gespeichert ist.

10. Kryptographisches Aktivierungsverfahren nach Anspruch 8 oder 9, bei dem das kryptographische Aktivierungssystem (1) ferner zweite Geräte (51, 52) umfasst, und die ersten Geräte (41), die zweiten Geräte und das Aktivierungszentrum (6, 8) in einer Baumform mit dem Aktivierungszentrum als Wurzel organisiert sind, wobei die ersten Geräte (41) die Väter der zweiten Geräte sind, umfassend die folgenden Schritte:
- Durchführen der in den Ansprüchen 8 oder 9 beschriebenen Operationen durch jedes zweite Gerät in Bezug auf sein erstes Vatergerät, wie sie von dem ersten Gerät in Bezug auf das Aktivierungszentrum durchgeführt werden; und
- sobald seine kryptographische Aktivierung durchgeführt wurde, von jedem ersten Gerät in Bezug auf jedes seiner zweiten Sohngeräte Ausführen der in den Ansprüchen 8 oder 9 beschriebenen Operationen, wie sie von der Aktivierungszentrale in Bezug auf die ersten Geräte ausgeführt werden.

## Claims

1. Cryptographic activation system (1) comprising an activation centre (6, 8) and an assembly of first equipment item(s) (7), said activation centre and said equipment items being connected by a telecommunications network, in which each first equipment item is adapted to encrypt, respectively decrypt, data as a function of a main encryption key, when said first equipment item has said decrypted main encryption key, said activation system being **characterised in that**:
each first equipment item comprises a non-volatile memory storing a main encryption key encrypted by a first secondary encryption key and is adapted, upon start-up of the first equipment item, to generate a cryptographic activation request indicating an identifier of said first equipment item and to transmit said cryptographic activation request to the activation centre via the telecommunications network;
the activation centre is adapted to receive said activation request, in order to validate the activation request as a function of at least the identifier of the first equipment item indicated in the request, and in order, only if it has validated the activation request, to generate an activation response message comprising said first secondary data key of the first equipment item and in order to transmit said activation response to the first equipment item via the telecommunications network;
said first equipment item being adapted to receive the cryptographic activation response, in order to finalise its cryptographic activation by extracting the first secondary data key of the first equipment item from said response, by decrypting said main encryption key stored in the memory with the extracted first secondary encryption key and thus obtaining said unencrypted main encryption key with a view to encryption of data by said first equipment item with said main key;
said first equipment item is, furthermore, adapted to obtain a second secondary encryption key, in order to encrypt the main encryption key with said obtained second secondary encryption key, in order to store said encrypted main encryption key in the non-volatile memory; and
said first equipment item being, furthermore, adapted, prior to being put out of service subsequent to said restart, to delete, from its non-volatile memory, the unencrypted main encryption key and the unencrypted second secondary encryption key.

2. Cryptographic activation system (1) according to claim 1, in which each first equipment item (7) is adapted, upon each restart of the first equipment item, to generate a cryptographic activation request intended for the activation centre (6, 8) for transmission by the latter of the secondary encryption key having been used by the first equipment item in order to obtain the encrypted main key stored in the non-volatile memory.

3. Cryptographic activation system (1) according to claim 1 or 2, in which each first equipment item (7) is, furthermore, adapted, before said restart, to store, in its non-volatile memory, its first secondary data key encrypted by a public asymmetrical encryption key in correspondence with its main encryption key encrypted by said first secondary encryption key;
each first equipment item being, furthermore, adapted, during generation of the activation request, to extract, from its non-volatile memory, said first secondary data key encrypted by the previously stored public asymmetrical encryption key and in order to insert it in the activation request;
the activation centre (6, 8) being adapted to extract, from the received activation request, said first secondary data key encrypted by the public asymmetrical encryption key, in order to decrypt it with the help of a private asymmetrical encryption key associated with said public asymmetrical encryption key, the first secondary data key of the first equipment item included in the activation response message generated by said centre being said first secondary data key thus decrypted by the private key;
each first equipment item being, furthermore, adapted, before said restart, to store in the non-volatile memory, the second secondary encryption key encrypted by the public asymmetrical encryption key in correspondence with the main encryption key encrypted by said secondary encryption key.

4. Cryptographic activation system (1) according to one of the preceding claims, in which each first equipment item (7) is, furthermore, adapted to encrypt all or part of the activation request and to decrypt all or part of the activation response with the help of a symmetrical encryption key of the communications; and in parallel the activation centre (6, 8) is, furthermore, adapted to encrypt all or part of the activation response and to decrypt all or part of the activation request with the help of said symmetrical encryption key of the communications.

5. Cryptographic activation system (1) according to one of the preceding claims, comprising, furthermore, second equipment items (51, 52), in which the first equipment items (41), the second equipment items and the activation centre (6, 8) are organised in the form of a tree having, for the root, said activation centre, the first equipment items (41) being the fathers of the second equipment items, in which each second equipment item is adapted to effect, with respect to its first father equipment item, the operations described in the preceding claims as implemented by the first equipment item with respect to the activation centre; and once its cryptographic activation has been effected, each first equipment item is then adapted to effect, with respect to each of its second son equipment items, the operations described in the preceding claims as implemented by the activation centre with respect to the first equipment items.

6. Equipment item adapted to be connected by a telecommunications network to a cryptographic activation system (1) comprising an activation centre (6, 8), said equipment item being adapted to encrypt, respectively decrypt, data as a function of a main encryption key, when said equipment item has said decrypted main encryption key, **characterised in that** it comprises a non-volatile memory storing a main encryption key encrypted by a first secondary encryption key and is adapted, upon restart of the equipment item, to generate a cryptographic activation request indicating an identifier of said equipment item and to transmit said cryptographic activation request to the activation centre via the telecommunications network;
said equipment being adapted to receive a cryptographic activation response comprising said first secondary data key of the equipment item coming from the activation centre, in order to finalise its cryptographic activation by extracting, from said response, the first secondary data key from the equipment item, by decrypting said main encryption key stored in the memory with the extracted first secondary encryption key and thus obtaining said unencrypted main encryption key with a view to encryption of data by said equipment item with said main key; said equipment item is, furthermore, adapted to obtain a second secondary encryption key, in order to encrypt the main encryption key with said obtained second secondary encryption key, in order to store said encrypted main encryption key in the non-volatile memory; and
said equipment item being, furthermore, adapted, prior to being put out of service subsequent to said restart, to delete, from its non-volatile memory, the unencrypted main encryption key and the unencrypted second secondary encryption key.

7. Equipment item according to claim 6 adapted to be the father of at least one other equipment item which is connected thereto via the telecommunications network in the cryptographic activation system organised in the form of a tree, said equipment item being adapted to receive a cryptographic activation request coming from the other equipment item and indicating an identifier of the other equipment item, in order to validate the activation request of the other equipment item as a function of at least the identifier of the other equipment item indicated in the request, and in order, only if the equipment item has finalised its own cryptographic activation and if it has validated the activation request, to generate an activation response message comprising said first secondary data key of the other equipment item and in order to transmit said activation response to the other equipment item via the telecommunications network.

8. Cryptographic activation method in a cryptographic activation system (1) comprising an activation centre (6, 8) and an assembly of first equipment item(s) (7) connected by a telecommunications network, said method being **characterised in that** it comprises the following steps:
- storage by each first equipment item of a main encryption key encrypted by a first secondary encryption key in a non-volatile memory of the first equipment item;
- upon restart of the first equipment item, generation by the first equipment item of a cryptographic activation request indicating an identifier of said first equipment item and transmission by the first equipment item of said cryptographic activation request to the activation centre via the telecommunications network;
- receipt by the activation centre of said activation request, validation of the activation request by the activation centre as a function of at least the identifier of the first equipment item indicated in the request, and only if it has validated the activation request, generation by the activation centre of an activation response message comprising said first secondary data key of the first equipment item and transmission by the activation centre of said activation response to the first equipment item via the telecommunications network;
- receipt by said first equipment item of the cryptographic activation response, finalisation of its cryptographic activation by extracting the first secondary data key of the first equipment item from said response, by decrypting said main encryption key stored in the memory with the extracted first secondary encryption key and thus obtaining said unencrypted main encryption key;
- encryption, respectively decryption, by each first equipment item of data as a function of the obtained unencrypted main encryption key;
- obtaining by said first equipment item of a second secondary encryption key, encryption by said first equipment item of the main encryption key with said obtained second secondary encryption key, then storage of said main encryption key encrypted by said first equipment item in its non-volatile memory; and
- prior to the first equipment item being put out of service subsequent to said restart, deletion from its non-volatile memory of the unencrypted main encryption key and of the unencrypted second secondary encryption key.

9. Cryptographic activation method according to claim 8, according to which, upon each restart of the first equipment item, a cryptographic activation request intended for the activation centre (6, 8) is generated for transmission by the latter of the secondary encryption key having been used by the first equipment item in order to obtain the encrypted main key stored in the non-volatile memory.

10. Cryptographic activation method according to claim 8 or 9, according to which the cryptographic activation system (1) comprises, furthermore, second equipment items (51, 52), and the first equipment items (41), the second equipment items and the activation centre (6, 8) are organised in the form of a tree having for the root said activation centre, the first equipment items (41) being the fathers of the second equipment items, comprising the following steps:
- implementation by each second equipment item, with respect to its first father equipment item, the operations described in claims 8 or 9 as implemented by the first equipment item with respect to the activation centre; and
- once its cryptographic activation has been effected, implementation by each first equipment item with respect to each of its second son equipment items, the operations described in claims 8 or 9 as implemented by the activation centre with respect to the first equipment items.
